(19) Europäisches Patentamt
European Patent Office
Office européen des brevets

(11) EP 4 744 895 A1

(12) # EUROPEAN PATENT APPLICATION
published in accordance with Art. 153(4) EPC

(43) Date of publication:
**20.05.2026 Bulletin 2026/21**

(21) Application number: **24839535.2**

(22) Date of filing: **27.06.2024**

(51) International Patent Classification (IPC):
***B32B 27/36*** *(2006.01)* ***B32B 27/16*** *(2006.01)*
***C08J 7/046*** *(2020.01)*

(52) Cooperative Patent Classification (CPC):
**B32B 27/16; B32B 27/18; B32B 27/30;
B32B 27/36; C08J 7/046**

(86) International application number:
**PCT/JP2024/023291**

(87) International publication number:
**WO 2025/013642 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.07.2023 JP 2023113640**

(71) Applicant: **MITSUBISHI GAS CHEMICAL COMPANY, INC.
Chiyoda-ku
Tokyo 100-8324 (JP)**

(72) Inventors:
- **WAKAYAMA, Shota
Tokyo 125-8601 (JP)**
- **OZAKI, Yushi
Tokyo 125-8601 (JP)**
- **NAKAMURA, Hitomi
Tokyo 125-8601 (JP)**
- **NEMOTO, Masashi
Tokorozawa-shi, Saitama 359-1164 (JP)**
- **UEKI, Akitake
Tokorozawa-shi, Saitama 359-1164 (JP)**

(74) Representative: **Hoffmann Eitle
Patent- und Rechtsanwälte PartmbB
Arabellastraße 30
81925 München (DE)**

(54) **LAMINATE FOR THERMOFORMING**

(57) According to the present invention, there can be provided a thermoforming laminate, comprising a base material layer and a hard coat layer, wherein the base material layer is formed by laminating a layer containing a polycarbonate resin and a layer containing a high-hardness resin, the hard coat layer is laminated on the layer containing a high-hardness resin in the base material layer, and the hard coat layer comprises a urethane (meth)acrylate resin and a hindered amine-based light stabilizer, and the content of the hindered amine-based light stabilizer is 0.1 to 4.0 parts by mass with respect to 100 parts by mass of the urethane (meth)acrylate resin.

[Figure 1]

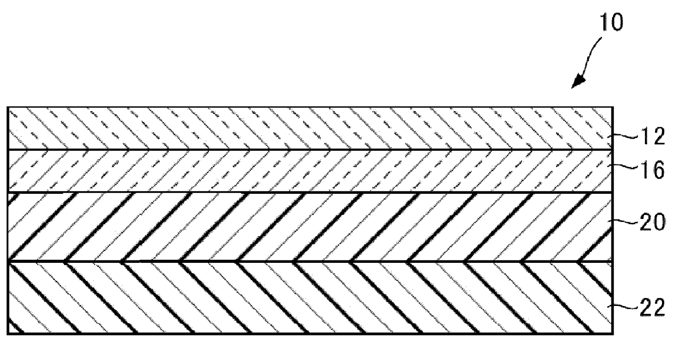


EP 4 744 895 A1

## Description

### Technical Field

The present invention relates to a pre-cure type thermoforming laminate.

### Background Art

To date, plastic home appliances and in-vehicle products have generally been produced by coating plastic molded products, as necessary. However, since such methods have a large environmental impact, various methods have been studied, including a method of insert molding of thermoformable decorative films as a typical example. In recent years, the demand for chemical resistance and scratch resistance of molded products has increased, and the demand for thermoforming laminates (e.g., films) with a hard coat has particularly increased. Thermoforming laminates with a hard coat are generally produced by applying a hard-coating liquid onto a base material and then curing it (Patent Literature 1).

In general, decorative films are required to be stain-resistant, but there has been a problem in that stain resistance is deteriorated over long-term use of the decorative films.

### Citation List

### Patent Literature

Patent Literature 1: JP Patent Publication (Kohyo) No. 2017-508828 A

### Summary of Invention

### Technical Problem

It is an object of the present invention to provide a pre-cure type thermoforming laminate with excellent long-term stain resistance, which solves the aforementioned problem of the prior art technique.

### Solution to Problem

The present inventors have conducted intensive studies directed towards achieving the above-described object, and as a result, the present inventors have found that a pre-cure type thermoforming laminate with excellent long-term stain resistance can be obtained by using a hard coat layer comprising a urethane (meth)acrylate resin and a specific amount of hindered amine-based light stabilizer, thereby completing the present invention. Specifically, the present invention is as follows.

< 1 > A thermoforming laminate, comprising a base material layer and a hard coat layer, wherein

the base material layer is formed by laminating a layer containing a polycarbonate resin and a layer containing a high-hardness resin,
the hard coat layer is laminated on the layer containing a high-hardness resin in the base material layer, and
the hard coat layer comprises a urethane (meth)acrylate resin and a hindered amine-based light stabilizer, and
the content of the hindered amine-based light stabilizer is 0.1 to 4.0 parts by mass with respect to 100 parts by mass of the urethane (meth)acrylate resin.

< 2 > The thermoforming laminate according to the above < 1 >, wherein the hindered amine-based light stabilizer comprises a compound represented by the following general formula (1):

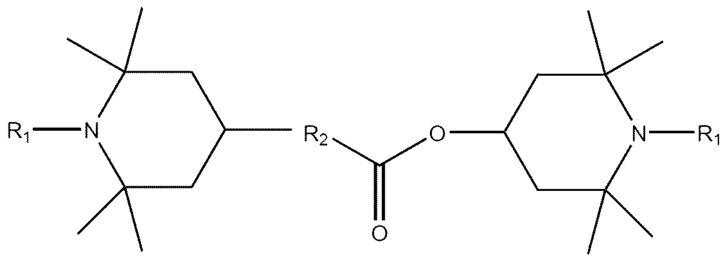

(1)

wherein $R_1$ represents a hydrogen atom, an alkyl group or an alkoxy group, and $R_2$ represents a group containing hydrocarbon, or an ether group.

< 3 > The thermoforming laminate according to the above < 1 > or < 2 >, wherein the hindered amine-based light stabilizer comprises at least one selected from the group consisting of compounds represented by the following structural formulae:

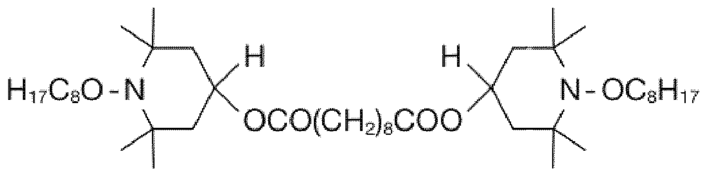

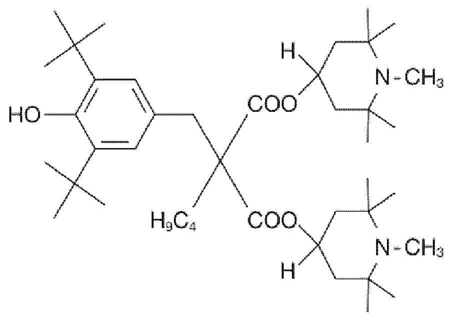

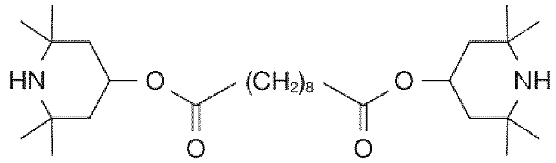

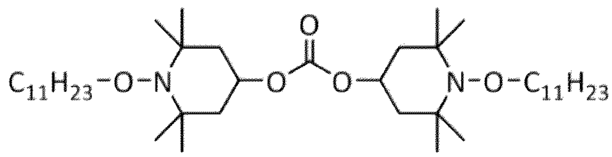

< 4 > The thermoforming laminate according to any one of the above < 1 > to < 3 >, wherein the high-hardness resin is a polymethyl methacrylate resin.

< 5 > The thermoforming laminate according to any one of the above < 1 > to < 4 >, wherein the hard coat layer has a thickness of 1 to 10 μm.

< 6 > The thermoforming laminate according to any one of the above < 1 > to < 5 >, which has a protective film on the surface of the hard coat layer that is opposite to the surface laminated with the base material layer, and a protective film on the surface of the base material layer that is opposite to the surface laminated with the hard coat layer.

< 7 > The thermoforming laminate according to any one of the above < 1 > to < 6 >, wherein the hard coat layer comprises a photopolymerization initiator and a silicone-based leveling agent having a photocurable polymeric group, but does not comprise a fluorine-based leveling agent having a photocurable polymeric group.

## Advantageous Effects of Invention

According to the present invention, a pre-cure type thermoforming laminate with excellent long-term stain resistance can be provided. A molded body obtained from the thermoforming laminate of the present invention can be used as a resin film laminate used in, for example, mobile devices, automotive interior materials, home appliances, etc.

## Brief Description of Drawings

[Figure 1] Figure 1 is a schematic cross-sectional view showing one example of the thermoforming laminate of the embodiment.

## Description of Embodiments

Hereinafter, individual constituent components of the pre-cure type thermoforming laminate according to the embodiment, the production methods, etc. will be described in detail.

### Thermoforming laminate

[1] The thermoforming laminate according to the embodiment comprises a base material layer and a hard coat layer, and the base material layer is formed by laminating a layer containing a polycarbonate resin (hereinafter also referred to as a "polycarbonate resin layer") and a layer containing a high-hardness resin (hereinafter also referred to as a "high-hardness resin layer), and the hard coat layer is laminated on the high-hardness resin layer.
In one preferred embodiment of the present invention, the thermoforming laminate according to the embodiment has a protective film on the surface of the hard coat layer that is opposite to the surface laminated with the base material layer. In one more preferred embodiment, and the thermoforming laminate according to the embodiment has a protective film on the surface of the hard coat layer that is opposite to the surface laminated with the base material layer, and also has a protective film on the surface of the base material layer that is opposite to the surface laminated with the hard coat layer.
Figure 1 is a schematic cross-sectional view showing an example of the thermoforming laminate according to the embodiment. In Figure 1, a thermoforming laminate 10 has a structure in which a hard coat layer 16 is laminated on a base material layer (a base material layer consisting of a high-hardness resin layer 20 and a polycarbonate layer 22), and a protective film 12 is further laminated on the hard coat layer 16. In other words, the surface of the hard coat layer 16 is protected by the protective film 12. An aspect, in which the protective film is laminated on the outer surface of the polycarbonate resin layer 22, is also preferable.
The thermoforming laminate according to the embodiment is an pre-cure type. Therefore, the thermoforming laminate according to the embodiment comprises a cured hard coat layer. The means for curing the hard coat layer depends on the material of the hard coat layer, and it may be, for example, curing with active energy rays or heat. The thermoforming laminate according to the embodiment can be successfully molded while the protective film is still attached. Therefore, it is possible to prevent the hard coat layer from being scratched or foreign matter from being caught in it during molding.
Hereafter, individual layers of the thermoforming laminate according to the embodiment will be successively described.

### [2] Base material layer

The base material layer is preferably laminated on the hard coat layer, so that it is allowed to come into contact with the surface of the hard coat layer that is opposite to the protective film. However, the lamination method is not limited to this, and another layer may be disposed between the base material layer and the hard coat layer.
The base material layer is formed by laminating the polycarbonate resin layer and the high-hardness resin layer.

#### < Polycarbonate resin layer >

The polycarbonate resin layer is a layer mainly comprising a polycarbonate resin. The polycarbonate resin comprised in the polycarbonate resin layer may be of one type, or of two or more types. The percentage of the polycarbonate resin in the polycarbonate resin layer comprising the polycarbonate resin as a main component is preferably 80% by mass or more, more preferably 90% by mass or more, and particularly preferably 95% by mass or more. Impact resistance is improved by increasing the content of the polycarbonate resin.
The type of the polycarbonate resin is not particularly limited, as long as it comprises a carbonate ester bond -[O-R-OCO]- (wherein R is an aliphatic group, an aromatic group, or a group containing both an aliphatic group and an aromatic

group, and may have either a linear or a branched structure) in the molecular main chain thereof. Among them, a polycarbonate resin having a bisphenol skeleton is preferable, and a bisphenol A type polycarbonate resin having a bisphenol A skeleton or a bisphenol C type polycarbonate resin having a bisphenol C skeleton is particularly preferred. As such a polycarbonate resin, a mixture of a bisphenol A type polycarbonate resin and a bisphenol C type polycarbonate resin, or a copolymer of bisphenol A and bisphenol C may be used. In order to improve the hardness of the polycarbonate resin layer, it is preferable to use a bisphenol C type polycarbonate resin (for example, a polycarbonate resin consisting of bisphenol C, a mixture of a bisphenol A type polycarbonate resin and a bisphenol C type polycarbonate resin, or a copolymer of bisphenol A and bisphenol C).

< High-hardness resin layer >

The high-hardness resin layer is a layer mainly comprising a high-hardness resin. In the present description, the high-hardness resin means a resin having a hardness that is higher than the hardness of the polycarbonate resin comprised in the polycarbonate resin layer, and having a pencil hardness of HB or higher. The pencil hardness of the high-hardness resin is preferably HB to 3H, more preferably H to 3H, and particularly preferably 2H to 3H. The high-hardness resin comprised in the high-hardness resin layer may be of one type, or of two or more types.

In the high-hardness resin layer comprising the high-hardness resin as a main component, the percentage of the high-hardness resin to the high-hardness resin layer is preferably 80% by mass or more, more preferably 90% by mass or more, and particularly preferably 95% by mass or more.

Specific examples of the preferred high-hardness resin may include, but are not particularly limited, homopolymers of various (meth)acrylic acid esters, including polymethyl methacrylate (PMMA) and methyl methacrylate (MMA) as typical examples, and copolymers of PMMA, MMA, or monomers constituting these, and one or more other monomers. Moreover, a mixture of multiple resins can also be used. Among these, polymethyl methacrylate (PMMA) is particularly preferable.

The polycarbonate resin layer or the high-hardness resin layer may comprise, as other resins, various types of thermoplastic resins such as polyethylene terephthalate (PET), triacetyl cellulose (TAC), polyethylene naphthalate (PEN), polyimide (PI), a cycloolefin copolymer (COC), a norbornene-containing resin, polyethersulfone, cellophane, and aromatic polyamide.

The base material layer used in the present invention is formed by laminating a polycarbonate resin layer and a high-hardness resin layer. However, the structure of the base material layer is not limited to a two-layer structure, and it may also be three or more layers. In the present invention, a hard coat layer is laminated on a high-hardness resin layer. By laminating a high-hardness resin layer and a hard coat layer that are excellent in terms of weather resistance on a polycarbonate resin layer that is poor in terms of weather resistance, a film excellent in terms of weather resistance can be obtained. In addition, by using a base material layer with a multi-layer structure that comprise a polycarbonate resin layer and a high-hardness resin layer, it is possible to maintain the thermoformability of the base material layer while improving the surface hardness of the base material layer.

The viscosity average molecular weight of the resin comprised in the base material layer is preferably 15,000 to 40,000, more preferably 20,000 to 35,000, and further preferably 22,500 to 25,000.

The base material layer may also comprise additives as components other than the aforementioned resin. Examples of the additives may include a heat stabilizer, an antioxidant, a flame retardant, a flame retardant aid, an ultraviolet ray absorber, a release agent and a coloring agent, and the base material layer may comprise one or two or more types of these additives. Furthermore, an antistatic agent, a fluorescent brightener, an antifogging agent, a fluidity improver, a plasticizer, a dispersant, an antibacterial agent, etc. may also be added to the base material layer.

The thickness of the base material layer, namely, the total thickness of the polycarbonate resin layer and the high-hardness resin layer, is not particularly limited, and it is preferably 0.10 mm to 1.0 mm. The thickness of the base material layer is, for example, 0.15 mm to 0.80 mm, 0.18 mm to 0.60 mm, or 0.25 mm to 0.40 mm. By using the base material layer having such a thickness, a film having excellent moldability and hardness can be realized.

[3] Hard coat layer

The hard coat layer comprises a urethane (meth)acrylate resin and a hindered amine-based light stabilizer, and the content of the hindered amine-based light stabilizer is 0.1 to 4.0 parts by mass, with respect to 100 parts by mass of the urethane (meth)acrylate resin. By using such a hard coat layer, a pre-cure type thermoforming laminate with excellent long-term stain resistance can be formed.

The hard coat layer may further comprise various additives for improving the properties, and examples of such additives may include nanoparticles, a leveling agent, a photopolymerization initiator, and an ultraviolet absorber.

(1) Urethane (meth)acrylate resin

The hard coat layer comprises a urethane (meth)acrylate resin. The urethane (meth)acrylate resin may be specifically a urethane (meth)acrylate resin that is a copolymer of an isocyanate compound and an acrylate compound, as described below.
It is to be noted that, in the present description, (meth)acrylate means methacrylate and/or acrylate, and that the (meth)acryloyl group means a methacryloyl group and/or an acryloyl group. Other similar descriptions are also interpreted as above.

- Isocyanate compound

The isocyanate compound may be, for example, an aromatic isocyanate optionally having an alkyl substituent (a methyl group, etc.), preferably an aromatic isocyanate containing 6 to 16 carbon atoms, more preferably an aromatic isocyanate containing 7 to 14 carbon atoms, and particularly preferably an aromatic isocyanate containing 8 to 12 carbon atoms.
The isocyanate compound is preferably an aromatic isocyanate, but aliphatic and alicyclic isocyanates may also preferably be used.
Specific examples of the isocyanate compound may include: polyisocyanates such as tolylene diisocyanate, diphenylmethane diisocyanate, hydrogenated diphenylmethane diisocyanate, polyphenylmethane polyisocyanate, modified diphenylmethane diisocyanate, hydrogenated xylylene diisocyanate, xylylene diisocyanate, hexamethylene diisocyanate, trimethylhexamethylene diisocyanate, tetramethylxylylene diisocyanate, isophorone diisocyanate, norbornene diisocyanate, 1,3-bis(isocyanatomethyl)cyclohexane, phenylene diisocyanate, lysine diisocyanate, lysine triisocyanate, and naphthalene diisocyanate; trimer compounds or tetramer compounds of these polyisocyanates; biuret-type polyisocyanates, water-dispersible polyisocyanates (e.g., "Aquanate 100," "Aquanate 110," "Aquanate 200," "Aquanate 210," etc., manufactured by Nippon Polyurethane Industry Co., Ltd.); and reaction products of these polyisocyanates with polyols.
Among these isocyanate compounds, particularly preferable are diphenylmethane diisocyanate, toluene diisocyanate, naphthalene diisocyanate, a trimethylolpropane (TMP) adduct of toluene diisocyanate, an isocyanate body of toluene diisocyanate, a TMP adduct of xylylene diisocyanate, and dicyclohexylmethane diisocyanate (H12MDI), isophorone diisocyanate (IPDI), xylylene diisocyanate (XDI), etc., which are shown in the following formulae.

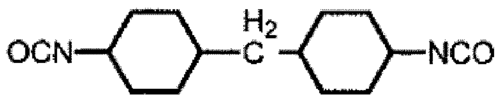

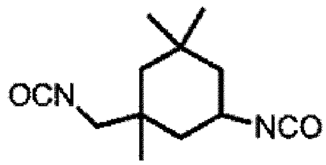

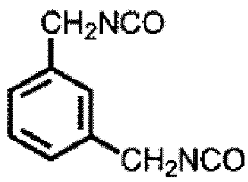

- Acrylate compound

Examples of the acrylate compound for forming a urethane (meth)acrylate resin comprising a molecular structure of cyclic skeleton may include pentaerythritol triacrylate (PETA), dipentaerythritol pentaacrylate (DPPA), and hydroxypropyl (meth)acrylate (hydroxypropyl acrylate; HPA).
Moreover, as such an acrylate compound, a compound having a (meth)acryloyloxy group and a hydroxyl group, for example, a monofunctional (meth)acrylic compound having a hydroxyl group, can also be used.
Examples of the monofunctional (meth)acrylic compound having a hydroxyl group may include hydroxyl group-containing mono(meth)acrylates {for example, hydroxyalkyl(meth)acrylates [e.g., hydroxy C2-20 alkyl (meth)acrylates such as 2-hydroxyethyl(meth)acrylate, 3-hydroxypropyl(meth)acrylate and 6-hydroxyhexyl(meth)acrylate, preferably hydroxy C2-12 alkyl (meth)acrylates, and more preferably hydroxy C2-6 alkyl (meth)acrylates], polyalkylene glycol mono(meth)acrylates [e.g., poly C2-4 alkylene glycol mono(meth)acrylates such as diethylene glycol mono(meth)acrylate and polyethylene glycol mono(meth)acrylate], and mono(meth)acrylates of polyols having three or more hydroxyl groups

[e.g., alkane polyol mono(meth)acrylates such as glycerin mono(meth)acrylate and trimethylolpropane mono(meth) acrylate, and mono(meth)acrylates of polymers of alkane polyols such as diglycerin mono(meth)acrylate]}, N-hydroxyalkyl(meth)acrylamides (e.g., N-hydroxy C1-4 alkyl(meth)acrylamides such as N-methylol(meth)acrylamide and N-(2-hydroxyethyl)(meth)acrylamide), and adducts of lactones (e.g., C4-10 lactones such as ε-caprolactone) added to the hydroxyl groups of these compounds (e.g., hydroxyalkyl(meth)acrylates) (e.g., adducts of about 1 to 5 moles of lactone added).

It is to be noted that these acrylate compounds may be used alone or in combination of two or more types.

A preferred specific example of the compound for forming a (meth)acryloyloxy group is 2-hydroxy-3-phenoxypropyl acrylate.

Among the above, pentaerythritol triacrylate (PETA), dipentaerythritol pentaacrylate (DPPA), and hydroxypropyl (meth)acrylate (hydroxypropyl acrylate; HPA) are particularly preferable.

- Copolymer of isocyanate compound and acrylate compound

Preferred specific examples of a copolymer of an isocyanate compound and an acrylate compound, that is, a urethane (meth)acrylate resin, may include a copolymer of xylylene diisocyanate (XDI) and pentaerythritol triacrylate (PETA), a copolymer of XDI and dipentaerythritol pentaacrylate (DPPA), a copolymer of dicyclohexylmethane diisocyanate (H12MDI) and PETA, a copolymer of isophorone diisocyanate (IPDI) and PETA, and a copolymer of XDI and hydroxypropyl (meth)acrylate (HPA).

Moreover, examples of the urethane (meth)acrylate resin comprising a molecular structure of cyclic skeleton may include copolymers using polyol compounds, in addition to the above-mentioned isocyanate compounds and acrylate compounds. The polyol compound (polyhydric alcohol) is a compound having two or more hydroxyl groups in a single molecule thereof, and examples thereof may include the following. That is, examples of the polyol compound may include: dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 3-methyl-1,2-butanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-4,5-pentanediol, 2,2,4-trimethyl-1,3-pentanediol, 1,6-hexanediol, 1,5-hexanediol, 1,4-hexanediol, 2,5-hexanediol, neopentyl glycol, and hydroxypivalic acid neopentyl glycol ester; polylactone diols obtained by adding lactones such as ε-caprolactone to these dihydric alcohols; ester diols such as bis(hydroxyethyl) terephthalate; polyether diols such as alkylene oxide adducts of bisphenol A, polyethylene glycol, polypropylene glycol, and polybutylene glycol; α-olefin epoxides such as propylene oxide and butylene oxide; monoepoxy compounds such as Cardura E10 [manufactured by Shell Chemicals Japan Ltd., glycidyl ester of synthetic highly branched saturated fatty acid]; trihydric or higher alcohols such as glycerin, trimethylolpropane, trimethylolethane, diglycerin, triglycerin, 1,2,6-hexanetriol, pentaerythritol, dipentaerythritol, sorbitol, and mannitol; polylactone polyols in which lactones such as ε-caprolactone are added to these trihydric or higher alcohols; alicyclic polyhydric alcohols such as 1,4-cyclohexanedimethanol, tricyclodecanedimethanol, hydrogenated bisphenol A, hydrogenated bisphenol F, hydrogenated bisphenol A, and hydrogenated bisphenol F.

As a polyol constituent unit, a urethane (meth)acrylate resin containing a constituent unit derived from tricyclodidecanedimethanol (TCDDM) represented by the following formula is preferably used.

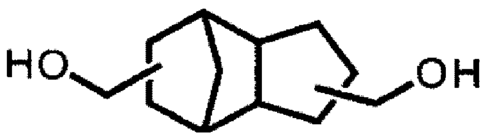

Preferred specific examples of the urethane (meth)acrylate resin containing a polyol constituent unit may include a copolymer of tricyclodidecanedimethanol (TCDDM), IPDI and PETA, a copolymer of TCDDM, H12MDI and PETA, copolymers in which DPPA is used instead of or together with PETA in these copolymers, and a copolymer of TCDDM, xylylene diisocyanate (XDI) and hydroxypropyl (meth)acrylate (HPA).

The urethane (meth)acrylate resin comprising a constituent unit derived from a polyol compound, in addition to an isocyanate compound and a compound having a (meth)acryloyloxy group and a hydroxyl group, preferably comprises at least a component represented by the following formula (i):

(A3)-O(OC)HN-A2-HN(OC)-O-A1-O-(CO)NH-A2-NH-(CO)O-(A3) ... (i)

A1 is an alkylene group derived from the aforementioned polyol compound,
A2 is each independently an alkylene group derived from the aforementioned isocyanate compound, and
A3 is each independently an alkyl group derived from the aforementioned compound having a (meth)acryloyloxy

group and a hydroxyl group.

The compound for forming A3 may be, for example, 2-hydroxy-3-phenoxypropyl acrylate.

In the urethane (meth)acrylate resin, the ratio between the constituent units derived from the compound having a (meth)acryloyloxy group and a hydroxyl group and the constituent units derived from the isocyanate compound is preferably 99 : 1 to 30 : 70 (weight ratio), more preferably 97 : 3 to 60 : 40, and further preferably 95 : 5 to 80 : 20.

(Acrylate-containing urethane (meth)acrylate resin)

A preferred specific example of the urethane (meth)acrylate resin may be a urethane (meth)acrylate resin containing a constituent unit derived from a urethane (meth)acrylate and a constituent unit derived from a (meth)acrylate. A more preferred specific example of such a urethane (meth)acrylate resin may be one containing a constituent unit derived from a hexafunctional urethane (meth)acrylate and a constituent unit derived from a difunctional (meth)acrylate.

- (Hexafunctional) urethane acrylate

As mentioned above, the urethane (meth)acrylate resin preferably comprises a constituent unit derived from a urethane (meth)acrylate, in particular, a hexafunctional urethane (meth)acrylate.

Preferred examples of the hexafunctional urethane acrylate may include those represented by the following formulae, i.e., a reaction product of dicyclohexylmethane diisocyanate (H12MDI) and pentaerythritol triacrylate (PETA), and a reaction product of isophorone diisocyanate (IPDI) and PETA. Specific examples of preferred products of these hexafunctional urethane acrylates may include CN-968 (a reaction product of IPDI and PETA; manufactured by Sartomer Japan Co., Ltd.) and CN-975 (manufactured by Sartomer Japan Co., Ltd.).

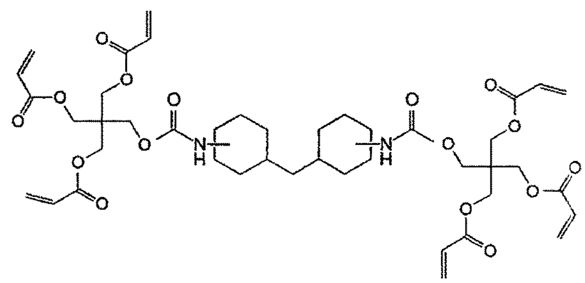

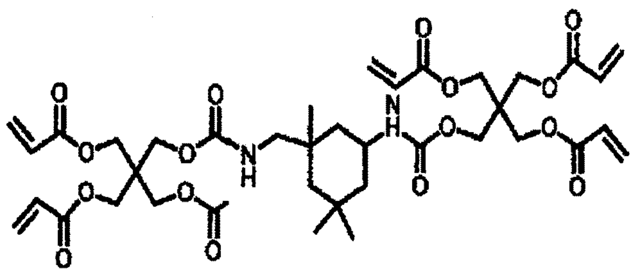

- (Meth)acrylates (difunctional (meth)acrylates, etc.)

The (meth)acrylate constituent unit that can constitute the urethane (meth)acrylate resin is preferably a constituent unit derived from a compound containing 4 to 20 carbon atoms, which comprises at least one (meth) acryloyloxy group and at least one vinyl ether group and which may optionally have a substituent. The number of carbon atoms in the (meth)acrylate is preferably 6 to 18, and more preferably 8 to 16. The substituent of the (meth)acrylate may be an alkyl group and the like. difunctional. (meth)acrylate [2-(2-vinyloxyethoxy)ethyl acrylate: VEEA] represented by the following formula is preferably used.

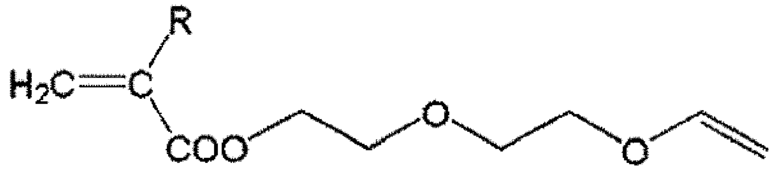

(In the above formula, R is a hydrogen atom or a methyl group.)

In the urethane (meth)acrylate resin, the ratio between the constituent units derived from the urethane acrylate and the constituent units derived from the (meth)acrylate is preferably 99 : 1 to 30 : 70 (weight ratio), more preferably 97 : 3 to 60 : 40, and further preferably 95 : 5 to 80 : 20.

(Fluorine-containing urethane (meth)acrylate resin)

As a urethane (meth)acrylate resin, a fluorine-containing urethane acrylate resin may be used. The fluorine-containing urethane acrylate resin preferably comprises at least a component represented by the following formula (ii):

(A3)-O(OC)HN-A2-HN(OC)-O-A1-O-(CO)NH-A2-NH-(CO)O-(A3) ... (ii)

a fluorine-containing diol containing 8 or less carbon atoms, which may optionally have a substituent, and the number of carbon atoms is preferably 6 or less, and is, for example, 1 to 4. The substituent comprised in the alkylene group of A1 may be an alkyl group or the like.

In the above formula (ii), A2 is each independently an alkylene group derived from an aliphatic or alicyclic isocyanate containing 4 to 20 carbon atoms, which may optionally have a substituent. The number of carbon atoms in A2 is preferably 6 to 16, and more preferably 8 to 12. The substituent of the alkylene group of A2 may be an alkyl group or the like.

Moreover, The alicyclic isocyanate that forms A2 may be, for example, an isophorone diisocyanate represented by the following formula.

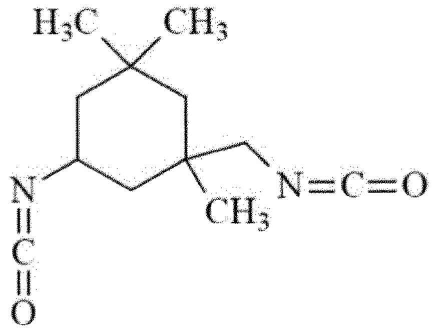

In the above formula (ii), A3 is each independently an alkyl group containing 4 to 30 carbon atoms, which comprises at least one (meth)acryloyloxy group and may further have a substituent. The number of carbon atoms in A3 is preferably 6 to 20, more preferably 8 to 16. The substituent of the alkyl group of A3 may be a branched alkyl group or the like. A3 preferably comprises at least two (meth)acryloyloxy groups, and may comprise, for example, three (meth) acryloyloxy groups. pentaerythritol triacrylate represented by the following formula.

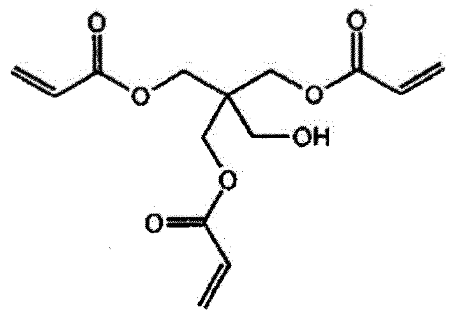

The fluorine-containing urethane acrylate resin is preferably one formed from each of the above-mentioned compounds, and the fluorine-containing urethane acrylate may include, for example, a compound represented by the

following formula (IV).

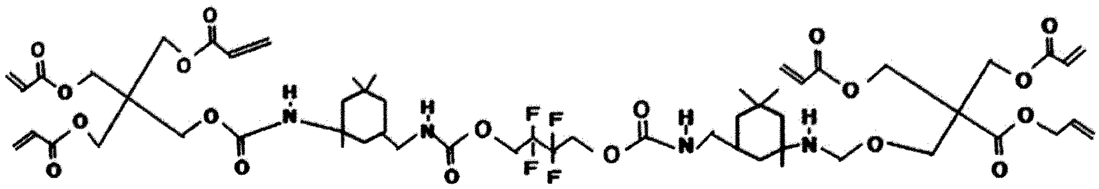

(IV)

- Other active energy ray curable resins

The hard coat layer may comprise an active energy ray curable resin other than a urethane meth(acrylate) resin, or a thermosetting resin in a range in which it does not impair the effects by the present invention. Any active energy ray curable resin can be used, as long as it has active energy ray curability. Examples of the active energy ray curable resin may include an epoxy (meth)acrylate polymer and a polyester (meth)acrylate polymer. Particular examples may include polymers having a (meth)acryloyl group, such as, for example, an epoxy (meth)acrylate polymer having a (meth)acryloyl group and a polyester (meth)acrylate polymer having a (meth)acryloyl group. Active energy ray curable resins are easily available from various companies.

Moreover, as active energy ray curable resins, for example, a (meth)acrylate polymer not containing a (meth) acryloyl group, or a (meth)acrylate polymer not containing a (meth)acrylate skeleton, etc. can also be used. Furthermore, as such active energy ray curable resins, compounds other than (meth)acrylate compounds, for example, epoxy compounds, oxetane compounds, etc. can also be used.

The resin contained in the hard coat layer may be of one type, or of two or more types. The content of the resin(s) in the hard coat layer is preferably 40% to 99% by mass, more preferably 50% to 95% by mass, and further preferably 60% to 90% by mass, when the total of the components contained in the hard coat layer is set to be 100% by mass.

The urethane (meth)acrylate resin used in the present invention has a weight average molecular weight of, preferably 500 to 200,000, more preferably 1,000 to 100,000, even more preferably 2,000 to 50,000, further preferably 3,000 to 30,000, and particularly preferably 5,000 to 10,000. By using a urethane (meth)acrylate resin having such a weight average molecular weight, a thermoforming laminate excellent in terms of moldability and scratch resistance can be obtained.

The weight average molecular weight can be measured based on the description in paragraphs [0061] to [0064] of JP Patent Publication (Kokai) No. 2007-179018 A. Details of the measurement method are shown below.

[Table 1]

| Conditions for measuring weight average molecular weight | |
|---|---|
| Device | "Aliance" manufactured by Waters |
| Column | "Shodex K-805L" (2 columns) manufactured by Showa Denko K.K. |
| Detector | UV detector: 254 nm |
| Eluent | Chloroform |

That is to say, first, a calibration curve showing the relationship between the elution time and the molecular weight of the polymer is created by a universal calibration method using polystyrene as a standard polymer. Thereafter, the elution curve (chromatogram) of the urethane (meth)acrylate resin is measured under the same conditions as those in the case of the above-mentioned calibration curve. Furthermore, the weight average molecular weight (Mw) is calculated from the elution time (molecular weight) of the urethane (meth)acrylate resin and the peak area (the number of molecules) at that elution time. The weight average molecular weight is represented by the following formula (A), in which Ni means the number of molecules having a molecular weight Mi.

$$\Sigma(NiMi^2)/\Sigma(NiMi) \cdots (A)$$

(2) Hindered amine-based light stabilizer

The hard coat layer comprises a hindered amine-based light stabilizer as an essential component. The content of such a hindered amine-based light stabilizer in the hard coat layer is 0.1 to 4.0 parts by mass, preferably 0.3 to 3.5 parts by mass, and more preferably 0.5 to 3.0 parts by mass, with respect to 100 parts by mass of the urethane (meth)acrylate resin.

In one preferred embodiment of the present invention, the hindered amine-based light stabilizer comprises a compound represented by the following general formula (1):

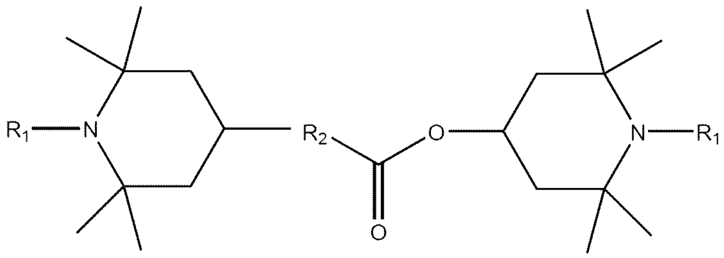

(1)

In the above general formula (1), $R_1$ represents a hydrogen atom, an alkyl group or an alkoxy group, and preferably a hydrogen atom, an alkyl group containing 1 to 4 carbon atoms, or an alkoxy group containing 6 to 13 carbon atoms.

In the above general formula (1), $R_2$ represents a group containing hydrocarbon, or an ether group, wherein the group containing hydrocarbon may optionally have a substituent such as a phenyl group. $R_2$ preferably represents an alkylene group having -O-C(=O)-, or an ether group.

In one preferred embodiment of the present invention, the hindered amine-based light stabilizer comprises at least one selected from the group consisting of compounds represented by the following structural formulae.

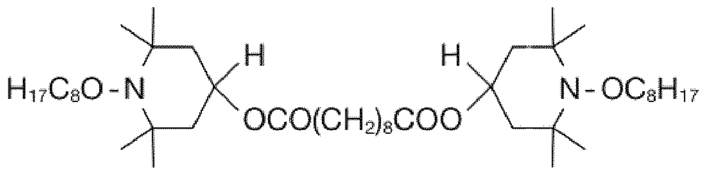

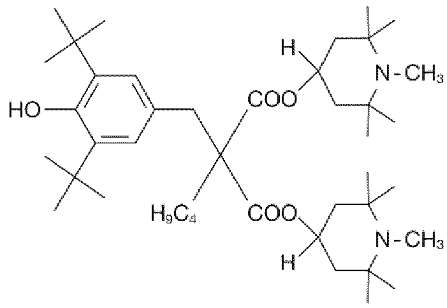

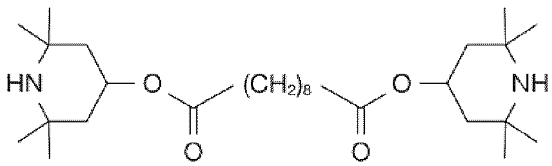

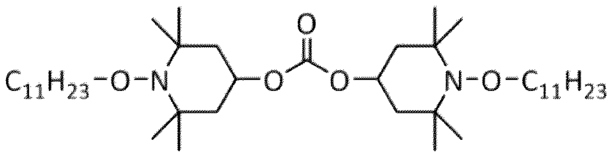

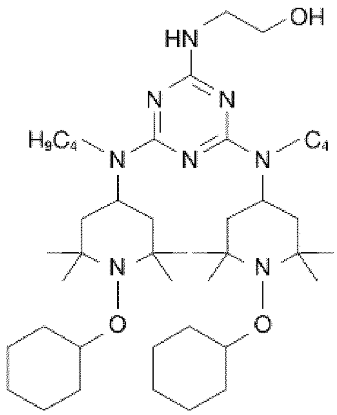

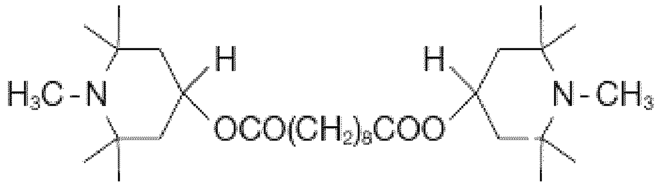

In the present invention, as such a hindered amine-based light stabilizer, Tinuvin 123 (manufactured by BASF), Tinuvin 770DF (manufactured by BASF), Tinuvin 144 (manufactured by BASF), LA-81 (manufactured by ADEKA), Tinuvin 152 (manufactured by BASF), Tinuvin 292 (manufactured by BASF), or the like can be preferably used. These hindered amine-based light stabilizers may be used alone as a single type, or in combination of two or more types.

(3) Nanoparticles

The hard coat layer may comprise nanoparticles. Thereby, the scratch resistance and hardness of the hard coat layer can be improved. The nanoparticles may be either inorganic or organic particles, but are preferably inorganic nanoparticles, and more preferably inorganic oxide nanoparticles. For example, metal oxide nanoparticles such as nanosilica, nanoalumina, nanotitania, and nanozirconia are used. In additioin, nanodiamonds and the like may also be used.

The hard coat layer preferably comprises alumina particles or silica particles as nanoparticles. The nanoparticles comprised in the hard coat layer are preferably treated with a surface treatment agent. By the surface treatment, the inorganic nanoparticles can be stably dispersed in the hard coat composition, particularly, in the urethane (meth)acrylate resin.

As a surface treatment agent used for nanoparticles, a compound having a substituent capable of binding to the surface of the nanoparticles and a substituent that is highly compatible with the components of the hard coat layer for dispersing the nanoparticles (e.g., the urethane (meth)acrylate resin, etc.) is preferably used. Examples of the surface treatment agent that can be used herein may include a silane compound, alcohol, amine, carboxylic acid, sulfonic acid, and phosphonic acid.

The inorganic nanoparticles preferably have polymerizable groups on their surfaces. The polymerizable groups can be introduced by the surface treatment of the inorganic nanoparticles. Specific examples of the polymerizable groups may include vinyl groups, meth(acrylic) groups, and free radical polymerizable groups.

to 150 nm, more preferably 1 to 100 nm, and particularly preferably 15 to 50 nm. It is to be noted that the average particle diameter of the nanoparticles can be measured by observing the cross section of the hard coat layer with an electron microscope photograph. For example, the average particle diameter can be determined by taking a TEM image of the cross section of a particle created by FIB processing or the like, measuring the diameters of 50 observed particles, and calculating the average value. If the particles are not spherical, the average value of the major axis and minor axis is regarded to be the diameter of the particle.

The hard coat layer preferably comprises 0.1 to 20 parts by mass of nanoparticles, for example, inorganic nanoparticles, with respect to 100 parts by mass of the urethane (meth)acrylate resin. The hard coat layer more preferably comprises 0.5 to 10 parts by mass of inorganic nanoparticles, and particularly preferably comprises 1 to 5 parts by mass of inorganic nanoparticles.

(4) Leveling agent

The hard coat layer may comprise a leveling agent. Thereby, the leveling property, stain resistance, and abrasion resistance of the hard coat layer can be improved. As such a leveling agent, a silicone-based additive, a fluorine-based additive, etc. is preferably used. As a fluorine-based compound contained in the fluorine-based additive, for example, a compound having a perfluoropolyether bond, etc. can be used. Although it is possible to synthesize the fluorine-based additive by oneself, it is also possible to easily obtain a commercially available product. For example, the Megafac RS series of DIC Corporation, the KY series of Shin-Etsu Chemical Co., Ltd., and the OPTOOL series of DAIKIN INDUSTRIES, LTD., etc. can be used.

As a silicone-based compound contained in the silicone-based additive, a compound having a polyalkyl siloxane bond may be used. Although it is possible to synthesize the silicone-based additive by oneself, it is also possible to easily obtain a commercially available product. For example, the KP series of Shin-Etsu Silicones, the BYK series of BYK Japan KK, the TEGO Glide series of EVONIK, etc. can be used. More specific examples of the silicone-based additive may include the polyether-modified polydimethylsiloxane BYK-UV3500 manufactured by BYK Japan KK and RS-57 manufactured by DIC Corporation.

In one embodiment of the present invention, from the viewpoint of fabric scratch resistance, an aspect, in which the hard coat layer comprises a photopolymerization initiator and a silicone-based leveling agent having a photocurable polymeric group, but does not comprise a fluorine-based leveling agent having a photocurable polymeric group, is preferable. In particular, from the viewpoint of PFAS regulations, it is preferable that the hard coat layer does not comprise fluorine compounds.

The content of the leveling agent is preferably 0.001 to 10 parts by mass, more preferably 0.005 to 5 parts by mass, and particularly preferably 0.01 to 5 parts by mass, with respect to 100 parts by mass of the urethane (meth)acrylate resin.

(5) Photopolymerization initiator

The urethane (meth)acrylate resin comprised in the hard coat layer is preferably active energy ray curable or heat curable. Therefore, the hard coat layer may further comprise a photopolymerization initiator. Examples of the photopolymerization initiator that can be used herein may include IRGACURE 184 (1-hydroxy-cyclohexyl-phenylketone), IRGACURE 1173 (2-hydroxy-2-methyl-1-phenyl-propan-1-one), IRGACURE TPO (2,4,6-trimethylbenzoyl-diphenylphosphine oxide), IRGACURE 819 (bis(2,4,6-trimethylbenzoyl)-phenylphosphine oxide), and EsacureONE (oligo(2-hydroxy-2-methyl-1-[4-(1-methylvinyl)phenyl]propanone). Among these, Esacure One, etc. is preferable as a photopolymerization initiator from the viewpoint of heat resistance.

The content of the photopolymerization initiator in the hard coat layer is preferably 1 to 15 parts by mass, more preferably 2 to 10 parts by mass, and particularly preferably 3 to 7 parts by mass, with respect to 100 parts by mass of the urethane (meth)acrylate resin.

(6) Ultraviolet absorber

The hard coat layer may comprise an ultraviolet absorber. Thereby, degradation of the urethane (meth)acrylate resin by ultraviolet irradiation during a weather resistance test can be suppressed. Examples of the ultraviolet absorber that can be used herein may include DAINSORB-T0 (manufactured by Daiwa Fine Chemicals Co., Ltd.), Tinuvin 405 (manufactured by BASF), Tinuvin 477 (manufactured by BASF), Tinuvin 479 (manufactured by BASF), Tinuvin 928 (manufactured by BASF), and UVA-903KT (manufactured by BASF).

The content of the ultraviolet absorber in the hard coat layer is preferably 0.1 to 10 parts by mass, more preferably 0.5 to 10 parts by mass, and particularly preferably 1 to 10 parts by mass, with respect to 100 parts by mass of the urethane (meth)acrylate resin.

(7) Other additives

The hard coat layer may comprise other additives such as, for example, a heat stabilizer, an antioxidant, a flame retardant, a flame retardant aid, a release agent, and a coloring agent. As long as the desired physical properties are not significantly impaired, an antistatic agent, a fluorescent brightener, an antifogging agent, a fluidity improver, a plasticizer, a dispersant, an antibacterial agent, etc. may be added to the hard coat layer.

The dilution solvent used in preparation of the hard coat composition is used to adjust the viscosity, and the dilution solvent can be used without particular restrictions as long as it is a non-polymerizable solvent. By using a dilution solvent, the hard coat composition can be easily applied onto the base material layer.

Examples of the dilution solvent may include toluene, xylene, ethyl acetate, propyl acetate, butyl acetate, methyl

cellosolve, ethyl cellosolve, ethyl cellosolve acetate, propylene glycol monomethyl ether acetate, methyl alcohol, ethyl alcohol, isopropyl alcohol, butyl alcohol, diacetone alcohol, acetone, methyl ethyl ketone, methyl isobutyl ketone, cyclohexanone, hexane, heptane, octane, decane, dodecane, propylene glycol monomethyl ether, and 3-methoxybutanol.

< Production of hard coat layer >

The hard coat layer is produced by applying a hard coat composition containing the above-mentioned materials onto the high-hardness resin layer in the base material layer. For example, the hard coat composition can be prepared by mixing individual materials with one another and further stirring the mixture with DISPER.

Examples of the method of applying the hard coat composition may include methods using a bar coater, a gravure coater, a die coater, a dip coat, a spray coat, etc. At this time, after the hard coat composition is applied, drying is performed at a predetermined temperature. The drying temperature is preferably 30°C to 150°C, and more preferably 60°C to 130°C. By performing drying at the temperature in the above-described range, the organic solvent can be removed from the hard coat layer, and deformation of other layers due to heating can be prevented.

The film thickness of the hard coat layer is not particularly limited, and it is preferably 1 to 10 μm, and more preferably 2 to 7 μm. By keeping the film thickness within the above-described range, the desired performance of the hard coat layer can be obtained, and problems regarding adhesion and moldability are unlikely to occur.

[4] Protective film

A protective film is preferably placed on the surface of the hard coat layer in order to prevent the surface of the hard coat layer from being scratched during a molding step, etc. Furthermore, such a protective film is also preferably placed on the outer surface of the base material layer. The protective film is attached to the surface of the hard coat layer, for example, after applying a hard coat composition onto a base material layer and drying it. It is preferable that the surface of the protective film in contact with the hard coat layer is an adhesive surface having a moderate adhesive force, and that it is attached to the surface of the hard coat layer. The configuration of the protective film is not particularly limited, and it is preferably a single-layer film having only an adhesive layer, or a film having a two-layer structure consisting of a base material and an adhesive layer. In the protective film having a two-layer structure, the adhesive surface of the adhesive layer is laminated on the hard coat layer, so that it is in contact with the hard coat layer. The protective film may have a multilayer structure further including layers other than the base material and the adhesive layer mentioned above. In addition, the protective film may also have a single-layer structure, and even in the protective film having a single-layer structure, the adhesive surface on the hard coat layer side has a moderate adhesive force.

When the protective film has a base material, the base material preferably comprises a thermoplastic resin, and more preferably comprises a polyolefin resin. Examples of the polyolefin resin comprised in the protective film may include polyethylene and polypropylene, and the polyolefin resin may be either a homopolymer or a copolymer. Among the polyolefin resins, polyethylene is preferable.

low density polyethylene (LLDPE), very low density polyethylene (VLDPE), medium density polyethylene (MDPE), high density polyethylene (HDPE), etc. can be used, and among others, low density polyethylene is preferable.

Moreover, as such a polyolefin copolymer, a copolymer of ethylene or propylene with a monomer copolymerizable therewith can be used. Examples of the monomers that can be copolymerized with ethylene or propylene may include α-olefins, styrenes, dienes, cyclic compounds, and an oxygen atom-containing compound.

Examples of the α-olefins may include 1-butene, 3-methyl-1-butene, 3-methyl-1-pentene, 4-methyl-1-pentene, 1-pentene, 1-hexene, 1-heptene, 1-octene, 1-decene, 1-tetradecene, 1-hexadecene, 1-octadecene, and 1-eicosene. Examples of the styrenes may include styrene, 4-methylstyrene, and 4-dimethylaminostyrene. Examples of the dienes may include 1,3-butadiene, 1,5-hexadiene, 1,4-hexadiene, and 1,7-octadiene. Examples of the cyclic compounds may include norbornene and cyclopentene. Examples of the oxygen-containing compounds may include hexenol, hexenoic acid, and methyl octenate. These copolymerizable monomers may be used alone or in combination of two or more types. The copolymer may also be a copolymer of ethylene and propylene. copolymer may be any of an alternating copolymer, a random copolymer, and a block copolymer.

The polyolefin resin comprised in the base material of the protective film may comprise a modified polyolefin resin that is modified with a small amount of carboxyl group-containing monomer such as acrylic acid, maleic acid, methacrylic acid, maleic anhydride, fumaric acid, or itaconic acid. The modification can be usually carried out by copolymerization or graft modification.

The content of the thermoplastic resin (e.g., a polyolefin resin) in the base material of the protective film is preferably 80% by mass or more, more preferably 90% by mass or more, and particularly preferably 95% by mass or more, with respect to the total mass of the base material.

The adhesive layer of the protective film preferably comprises an elastomer or a thermoplastic resin. Examples of

the thermoplastic resin comprised in the adhesive layer may include polyolefin resins such as polyethylene and polypropylene, and the thermoplastic resin may be either a homopolymer or a copolymer. Among the polyolefin resins, polyethylene is preferable.

The content of the elastomer or the thermoplastic resin in the adhesive layer of the protective film is preferably 80% by mass or more, more preferably 90% by mass or more, and particularly preferably 95% by mass or more, with respect to the total mass of the adhesive layer.

The thickness of the protective film is preferably 10 to 100 μm, and more preferably 20 to 80 μm. Even in a case where the protective film is composed of two or more layers, it is preferable that the total thickness of individual layers is within the above-described range.

In the protective film, the value of the surface roughness Sa (ISO 25178) on the adhesive surface to be contacted with the hard coat layer is preferably 0.100 μm or less before it is adhered to the hard coat layer. The value of the surface roughness Sa of the adhesive surface of the protective film in a state in which it is not adhered is more preferably 0.090 μm or less, further preferably 0.080 μm or less, and particularly preferably 0.070 μm or less.

The value of the adhesive force of the adhesive surface of the protective film is preferably 5 (mN/25mm) or more and 5000 (mN/25mm) or less, and more preferably 9 (mN/25mm) or more and 3000 (mN/25mm) or less, against the surface of the PMMA (high-hardness resin layer).

[5] Method for producing thermoforming laminate

The thermoforming laminate according to the embodiment is produced as follows. First, the material of the base material layer is processed into a layer (sheet) by a conventional method to prepare a base material layer. For example, extrusion molding, cast molding, etc. can be used. An example of the extrusion molding may be a method comprising melting and kneading pellets, flakes or powders of a resin composition in an extruder, then extruding the resultant from a T-die or the like, and then cooling and solidifying the resulting semi-molten sheet, while being pressed between rolls, to form a sheet.

Thereafter, a hard coat composition obtained by mixing the above-mentioned materials is applied onto the outer surface of the high-hardness resin layer in the resulting base material layer having multiple layers (the polycarbonate resin layer and the high-hardness resin layer) to form a hard coat layer.

Furthermore, as necessary, the above-mentioned protective film is adhered onto the hard coat layer to produce a thermoforming laminate. Further, the above-mentioned protective film is also preferably adhered onto the outer surface of the base material.

Examples

Hereinafter, the present invention will be described in more detail in the following examples. However, these examples are not intended to limit the content of the present invention.

< Antifouling performance test >

2 μL of Oleic acid was dropped as an artificial fingerprint solution onto a test piece, and after spreading the solution with a silicone pad, a cloth was attached and passed completely over the artificial fingerprint solution. This operation was carried out repeatedly up to 15 times as an upper limit, until fingerprint marks were no longer visible to the naked eyes. Stain resistance was evaluated based on the number of times to wipe off fingerprints according to the following criteria:

o: The number of times to wipe off fingerprints was less than 10.
Δ: The number of times to wipe off fingerprints was 10 or more and less than 15.
×: Fingerprint marks still remained even after 15 times to wipe off fingerprints.

< Long-term stability test of antifouling performance >

A test was conducted using Ci4000 manufactured by ATLAS, in accordance with SAE J2412 testing standards, for a test time of 509 hours (cumulative irradiation amount: 790 kJ/$m^2$, control wavelength: 340 nm). The test conditions are shown in the table below. After completion of the test, the long-term stability of antifouling performance was evaluated by the same method as that in the above-described antifouling performance test.

[Table 2]

| | | |
|---|---|---|
| Optical filter | Inner side: quartz; outer side: borosilicate type S | |
| Cycle | Light | Dark |
| Irradiance | 0.55 $W/m^2$ | |
| Control wavelength | 340 nm | |
| Black panel temperature | (89±3)°C | |
| Tank temperature | (62±3)°C | (38±3)°C |
| Relative humidity | (50±10)% RH | (95±5)% RH |
| Cycle time | 3.8 hours | 1 hour |

< Fabric scratch resistance test >

Gauze (Osaki Medical Corporation) was moved back and forth across a test piece at a pressure of 500 $gf/cm^2$ to scratch the hard coat layer. The appearance of the scratched test piece was observed, and the scratch resistance was evaluated according to the following criteria:

◎: There were no scratches after 1000 reciprocating motions.
o: There were no scratches after 100 reciprocating motions.
×: There were scratches after 100 reciprocating motions.

(Example 1)

To 100 parts by mass of a urethane (meth)acrylate resin (model number UN-954, manufactured by Negami Chemical Industrial Co., Ltd.; weight average molecular weight: 5,000; the number of functional groups: 6), 1 part by mass of inorganic oxide particles (Nanoalumina Particle Dispersion NANOBYK-3610, manufactured by BYK Japan KK; average particle diameter: 20 to 25 nm), 0.5 parts by mass of a silicone-based leveling agent (polyether-Modified polydimethylsiloxane BYK-UV3500, manufactured by BYK Japan KK), 1 part by mass of a fluorine-based leveling agent (RS-75A, manufactured by DIC Corporation), 5 parts by mass of a photopolymerization initiator ESACURE-ONE, and 0.5 parts by mass of a hindered amine-based light stabilizer represented by the following structural formula (Tinuvin 144, manufactured by BASF) were added. Thereafter, propylene glycol monomethyl ether was added as a dilution solvent to the mixture to a solid concentration of 13% by mass, followed by stirring, to a hard coat composition.

A two-layered product DF02U (manufactured by Mitsubishi Gas Chemical Company, Inc., thickness: 0.254 mm) consisting of a bisphenol A-type polycarbonate resin and PMMA was prepared as a base material layer. Using a wire bar coater, the hard coat composition obtained above was applied onto the PMMA side of the base material layer to a dry film thickness of 3 μm. After drying the hard coat composition at 80°C for 3 minutes, it was irradiated with 200 $mJ/cm^2$ ultraviolet light, using a UV irradiator (manufactured by Heraeus), so as to produce a thermoforming laminate.

The resulting thermoforming laminate was evaluated in terms of initial antifouling performance and the long-term stability of antifouling performance. The results are shown in the following tables.

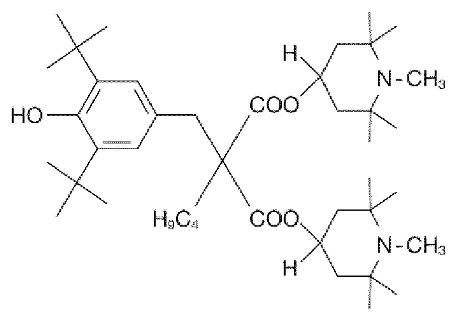

(Examples 2 to 17 and Comparative Examples 1 to 5)

Each thermoforming laminate was produced in the same manner as that of Example 1, with the exception that the components shown in the following tables were used in amounts shown in the following tables. The resulting thermoforming laminates were evaluated in terms of initial antifouling performance and the long-term stability of antifouling performance. The results are shown in the following tables.

(Examples 18 and 19)

Each thermoforming laminate was produced in the same manner as that of Example 1, with the exception that the components shown in the following tables were used in amounts shown in the following tables, and that after drying the obtained hard coat composition at 60°C for 4 minutes, the hard coat layer was irradiated with 400 mJ/$cm^2$ ultraviolet light, using a UV irradiator (manufactured by Heraeus).

[Table 3]

| | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Composition | Resin base material | PC/PMMA | PC/PMMA | PC/PMMA | PC/PMMA | PC/PMMA | PC/PMMA | PC/PMMA | PC/PMMA | PC/PMMA | PC/PMMA | PC/PMMA | PC/PMMA |
| | Urethane (meth)acrylate resin (UN-954) | 100 | 100 | 100 | 100 | 100 | 100 | 100 | | | | | |
| | Urethane (meth)acrylate resin (EBECRYL 4491) | | | | | | | | 100 | 100 | 100 | 100 | 100 |
| | Urethane (meth)acrylate resin (H-340) | | | | | | | | | | | | |
| | Inorganic oxide particles (NANOBYK-3610) | 1 | 1 | 1 | 1 | 1 | 1 | | 1 | 3 | | 1 | 1 |
| | Organosilica sol (MEK-AC-2140Z) | | | | | | | | | | 10 | | |
| | Silicone-based leveling agent (BYK-UV3500) | 0.5 | 0.5 | 0.5 | 0.5 | 0.5 | 0.5 | | 1 | 1 | 1 | 2 | |
| | Acrylic group-type surface modifier (KP-420) | | | | | | | | | | | | 1 |
| | Fluorine-based leveling agent (RS-75A) | 1 | 1 | 1 | 1 | 1 | 1 | 1 | 1 | 1 | 1 | 1 | 1 |
| | Fluorine-based antifouling additive (KY-1216) | | | | | | | | | | | | |
| | Silicone-based leveling agent (RS-57) | | | | | | | | | | | | |
| | Photopolymerization initiator (ESACURE-ONE) | 5 | 5 | 5 | 5 | 5 | 5 | 5 | 5 | 5 | 5 | 5 | 5 |
| | Hindered amine-based light stabilizer (Tinuvin 144) | 0.5 | 1.5 | 2 | 3 | | | 2 | 2 | 2 | 2 | 2 | 2 |
| | Hindered amine-based light stabilizer (Tinuvin 123) | | | | | 2 | | | | | | | |

(continued)

| | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| | Hindered amine-based light stabilizer (Tinuvin 770DF) | | | | | | 2 | | | | | | |
| | Ultraviolet absorber (Tinuvin 400) | | | | | | | | | | | | |
| | Ultraviolet absorber (Tinuvin 477) | | | | | | | | | | | | |
| | Ultraviolet absorber (Tinuvin 479) | | | | | | | | | | | | |
| Initial antifouling performance | Number of wipes | 4 | 4 | 4 | 4 | 4 | 4 | 4 | 5 | 5 | 5 | 6 | 5 |
| | Evaluation | ○ | ○ | ○ | ○ | ○ | ○ | ○ | ○ | ○ | ○ | ○ | ○ |
| Long-term stability of antifouling performance | Number of wipes | 6 | 6 | 6 | 6 | 6 | 6 | 6 | 7 | 7 | 7 | 7 | 7 |
| | Evaluation | ○ | ○ | ○ | ○ | ○ | ○ | ○ | ○ | ○ | ○ | ○ | ○ |
| Fabric scratch resistance (100 times: ○; 1000 times: ◎) | | ○ | ○ | ○ | ○ | ○ | ○ | ○ | ○ | ○ | ○ | ○ | ○ |

| | | Example 13 | Example 14 | Example 15 | Example 16 | Example 17 | Example 18 | Example 19 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|
| Composition | Resin base material | PC/PMMA | PC/PMMA | PC/PMMA | PC/PMMA | PC/PMMA | PC/PMMA | PC/PMMA | PC/PMMA | PC/PMMA | PC/PMMA | PC/PMMA | PC/PMMA |
| | Urethane (meth)acrylate resin (UN-954) | | | | | | | 100 | 100 | | 100 | 100 | 100 |
| | Urethane (meth)acrylate resin (EBECRYL 4491) | 100 | 100 | 100 | | | | | | | | | |
| | Urethane (meth)acrylate resin (H-340) | | | | 100 | 100 | 100 | | | 100 | | | |
| | Inorganic oxide particles (NANOBYK-3610) | 1 | 1 | 2 | 2 | | | | 1 | 1 | 1 | 1 | 1 |

(continued)

| | | Example 13 | Example 14 | Example 15 | Example 16 | Example 17 | Example 18 | Example 19 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|
| | Organosilica sol (MEK-AC-2140Z) | | | | | 10 | | | | | | | |
| | Silicone-based leveling agent (BYK-UV3500) | 1 | 1 | | 1 | | | | 1 | 1 | 1 | 1 | 1 |
| | Acrylic group-type surface modifier (KP-420) | | | 1 | | 1 | | | | | | | |
| | Fluorine-based leveling agent (RS-75A) | | | 1 | 1 | 1 | | | 1 | 1 | 1 | 1 | 1 |
| | Fluorine-based antifouling additive (KY-1216) | 1 | 1 | | | | | | | | | | |
| | Silicone-based leveling agent (RS-57) | | | | | | 1 | 1 | | | | | |
| | Photopolymerization initiator (ESACURE-ONE) | 5 | 5 | 5 | 5 | 5 | 5 | 5 | 5 | 5 | 5 | 5 | 5 |
| | Hindered amine-based light stabilizer (Tinuvin 144) | 2 | 2 | 2 | 2 | | | | | | | | |
| | Hindered amine-based light stabilizer (Tinuvin 123) | | | | | 2 | 1.5 | 1.5 | | | | | |
| | Hindered amine-based light stabilizer (Tinuvin 770DF) | | | | | | | | | | | | |
| | Ultraviolet absorber (Tinuvin400) | | | | | | | | | | 4 | | |
| | Ultraviolet absorber (Tinuvin477) | | | | | | | | | | | 4 | |
| | Ultraviolet absorber (Tinuvin479) | | | | | | | | | | | | 4 |

(continued)

| | | Example 13 | Example 14 | Example 15 | Example 16 | Example 17 | Example 18 | Example 19 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|
| Initial anti-fouling performance | Number of wipes | 5 | 5 | 5 | 5 | 5 | 3 | 4 | 5 | 5 | 5 | 5 | 5 |
| | Evaluation | ○ | ○ | ○ | ○ | ○ | ○ | ○ | ○ | ○ | ○ | ○ | ○ |
| Long-term stability of antifouling performance | Number of wipes | 7 | 7 | 7 | 7 | 7 | 5 | 6 | 15 | 15 | 15 | 15 | 15 |
| | Evaluation | ○ | ○ | ○ | ○ | ○ | ○ | ○ | × | × | × | × | × |
| Fabric scratch resistance (100 times: ○; 1000 times: ◎) | | ○ | ○ | ○ | ○ | ○ | ◎ | ◎ | ○ | ○ | ○ | ○ | ○ |

< Explanation of components in tables >

Urethane (meth)acrylate resin (EBECRYL 4491): manufactured by Daicel-Allnex Ltd., weight average molecular weight: 7000, number of functional groups: 2 Urethane (meth)acrylate resin (H-340): manufactured by Negami Chemical Industrial Co., Ltd., weight average molecular weight: 8000, number of functional groups: 6
Organosilica sol (MEK-AC-2140Z): manufactured by Nissan Chemical Corporation
Acryl group-type surface modifier (KP-420): manufactured by Shin-Etsu Silicone Fluorine-based antifouling (KY-1216): manufactured by Shin-Etsu Chemical Co., Ltd.
Silicone-based leveling agent (RS-57): manufactured by DIC Corporation

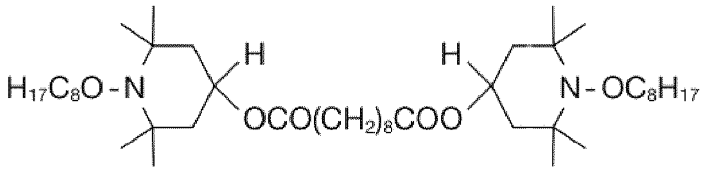

Hindered amine-based light stabilizer (Tinuvin 123): manufactured by BASF

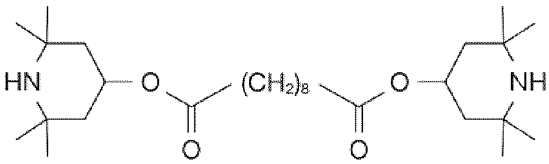

Hindered amine-based light stabilizer (Tinuvin 770DF): manufactured by BASF

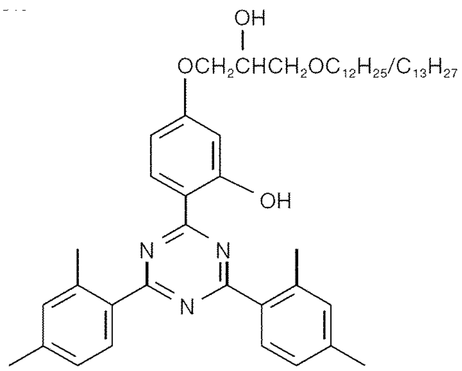

Ultraviolet absorber (Tinuvin 400): manufactured by BASF
Ultraviolet absorber (Tinuvin 477): manufactured by BASF, hydroxyphenyltriazine (HPT)-based compound
Ultraviolet absorber (Tinuvin 479): manufactured by BASF, hydroxyphenyltriazine (HPT)-based compound

Several embodiments of the present invention have been described. These embodiments are presented as examples and are not intended to limit the scope of the invention. These novel embodiments can be carried out in various other forms, and various omissions, replacements and modifications can be made in a range that does not depart from the gist of the invention. These embodiments and variations thereof are included in the scope and gist of the invention, and are also included in the scope of the inventions recited in the claims and the equivalents thereof.

Reference Signs List

10: Thermoforming laminate
12: Protective film

16: Hard coat layer
20: High-hardness resin layer (base material layer)
22: Polycarbonate resin layer (base material layer)

## Claims

**1.** A thermoforming laminate, comprising a base material layer and a hard coat layer, wherein

the base material layer is formed by laminating a layer comprising a polycarbonate resin and a layer containing a high-hardness resin,
the hard coat layer is laminated on the layer comprising a high-hardness resin in the base material layer, and the hard coat layer comprises a urethane (meth)acrylate resin and a hindered amine-based light stabilizer, and a content of the hindered amine-based light stabilizer is 0.1 to 4.0 parts by mass with respect to 100 parts by mass of the urethane (meth)acrylate resin.

**2.** The thermoforming laminate according to claim 1, wherein the hindered amine-based light stabilizer comprises a compound represented by the following general formula (1):

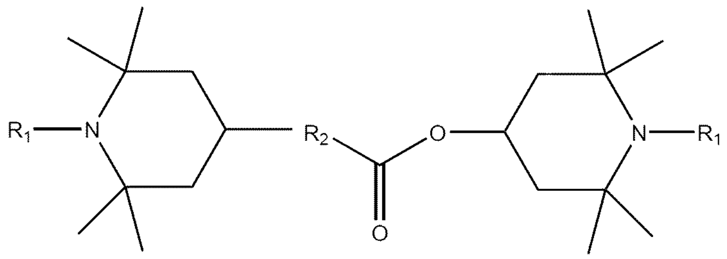

(1)

wherein $R_1$ represents a hydrogen atom, an alkyl group or an alkoxy group, and $R_2$ represents a group containing hydrocarbon, or an ether group.

**3.** The thermoforming laminate according to claim 1 or 2, wherein the hindered amine-based light stabilizer comprises at least one selected from the group consisting of compounds represented by the following structural formulae:

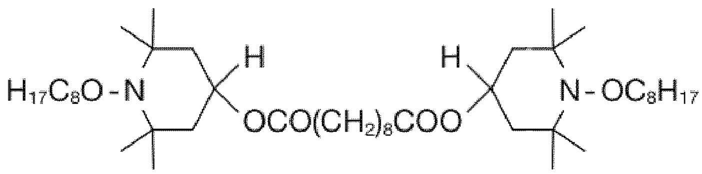

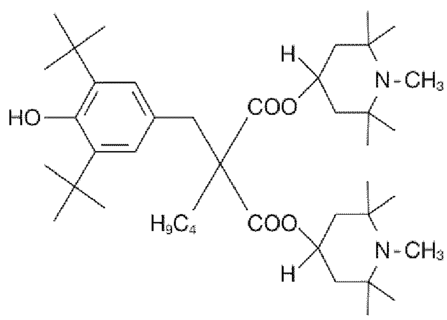

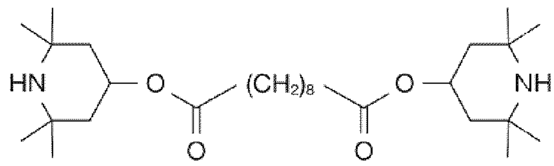

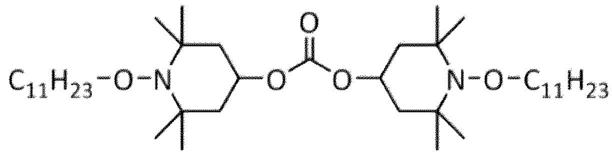

4. The thermoforming laminate according to any one of claims 1 to 3, wherein the high-hardness resin is a polymethyl methacrylate resin.

5. The thermoforming laminate according to any one of claims 1 to 4, wherein the hard coat layer has a thickness of 1 to 10 μm.

6. The thermoforming laminate according to any one of claims 1 to 5, which has a protective film on a surface of the hard coat layer that is opposite to a surface laminated with the base material layer, and a protective film on the surface of the base material layer that is opposite to the surface laminated with the hard coat layer.

7. The thermoforming laminate according to any one of claims 1 to 6, wherein the hard coat layer comprises a photopolymerization initiator and a silicone-based leveling agent having a photocurable polymeric group, but does not comprise a fluorine-based leveling agent having a photocurable polymeric group.

[Figure 1]

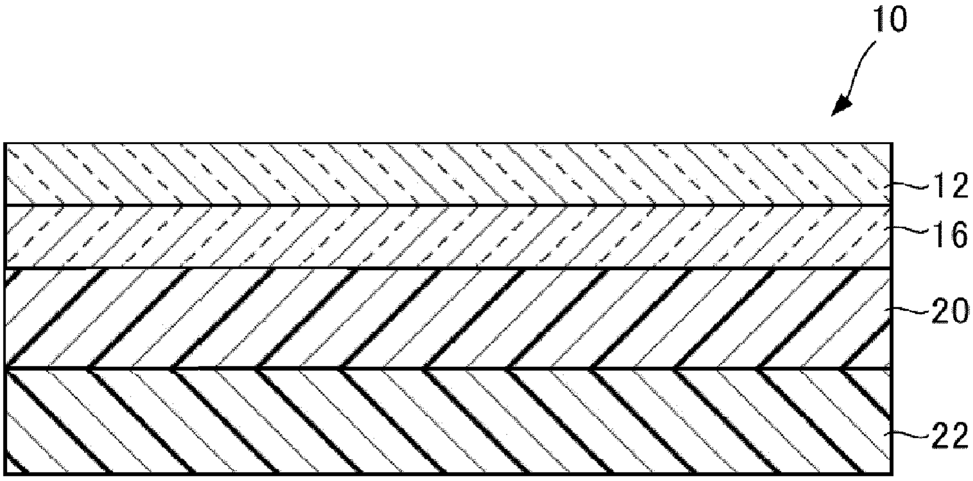

## INTERNATIONAL SEARCH REPORT

International application No.
**PCT/JP2024/023291**

### A. CLASSIFICATION OF SUBJECT MATTER

***B32B 27/36***(2006.01)i; ***B32B 27/16***(2006.01)i; ***C08J 7/046***(2020.01)i
FI: B32B27/36 102; B32B27/16 101; C08J7/046 A CFD

According to International Patent Classification (IPC) or to both national classification and IPC

### B. FIELDS SEARCHED

Minimum documentation searched (classification system followed by classification symbols)

B32B27/08; B32B27/16; B32B27/30; B32B27/36; C08J7/046; C09D133/08-133/10; C09D175/16; C08L75/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2012-126760 A (MITSUBISHI CHEMICAL CORPORATION) 05 July 2012 (2012-07-05) claims, paragraphs [0001]-[0006], [0021]-[0046], [0057]-[0059], [0111]-[0161] | 1-5, 7<br>6, 7 |
| X<br>Y | JP 2012-81742 A (MITSUBISHI CHEMICAL CORPORATION) 26 April 2012 (2012-04-26) claims, paragraphs [0001]-[0007], [0069]-[0151] | 1-5, 7<br>6, 7 |
| Y | JP 7223187 B1 (DAI NIPPON PRINTING CO., LTD.) 15 February 2023 (2023-02-15) claims, paragraphs [0033]-[0053], [0073]-[0084], [0103], fig. 2 | 6 |
| Y | JP 2013-10921 A (MITSUBISHI RAYON CO., LTD.) 17 January 2013 (2013-01-17) claims, paragraphs [0001]-[0002], [0081]-[0099] | 7 |
| Y | JP 2012-526671 A (BAYER MATERIALSCIENCE AG) 01 November 2012 (2012-11-01) claims, paragraphs [0129]-[0154] | 7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 August 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/023291**

**C. DOCUMENTS CONSIDERED TO BE RELEVANT**

| Category* | Citation of document, with indication, where appropriate, of the relevant passages | Relevant to claim No. |
|---|---|---|
| A | JP 2012-206378 A (DAI NIPPON PRINTING CO., LTD.) 25 October 2012 (2012-10-25)<br>entire text | 1-7 |
| A | JP 2007-314769 A (MITSUBISHI RAYON CO., LTD.) 06 December 2007 (2007-12-06)<br>entire text | 1-7 |
| A | US 2020/0393568 A1 (COVESTRO DEUTSCHLAND AG) 17 December 2020 (2020-12-17)<br>entire text | 1-7 |
| A | US 2009/0301561 A1 (OPTISOLAR INC.) 10 December 2009 (2009-12-10)<br>entire text | 1-7 |
| A | US 2008/0220250 A1 (KARL WORKWAG LACK-UND FARBENFABRIK GMBH & CO. KG) 11 September 2008 (2008-09-11)<br>entire text | 1-7 |

Form PCT/ISA/210 (second sheet) (July 2022)

**INTERNATIONAL SEARCH REPORT**
**Information on patent family members**

International application No.
**PCT/JP2024/023291**

| Patent document cited in search report | Publication date (day/month/year) | Patent family member(s) | Publication date (day/month/year) |
|---|---|---|---|
| JP 2012-126760 A | 05 July 2012 | (Family: none) | |
| JP 2012-81742 A | 26 April 2012 | (Family: none) | |
| JP 7223187 B1 | 15 February 2023 | JP 2023-139489 A<br>WO 2023/182096 A1 | |
| JP 2013-10921 A | 17 January 2013 | (Family: none) | |
| JP 2012-526671 A | 01 November 2012 | US 2012/0114933 A1<br>claims, paragraphs [0140]-[0175]<br>WO 2010/130349 A1<br>EP 2430100 A1<br>DE 102009020934 A<br>CN 102421856 A<br>KR 10-2012-0044277 A | |
| JP 2012-206378 A | 25 October 2012 | (Family: none) | |
| JP 2007-314769 A | 06 December 2007 | US 2009/0111904 A1<br>WO 2007/125746 A1<br>EP 2011837 A1<br>CA 2650406 A<br>CN 101437904 A<br>KR 10-2009-0013802 A<br>TW 200801141 A | |
| US 2020/0393568 A1 | 17 December 2020 | WO 2019/121347 A1<br>EP 3729127 A1<br>TW 201938387 A<br>CN 111448473 A<br>KR 10-2020-0103035 A | |
| US 2009/0301561 A1 | 10 December 2009 | WO 2009/148589 A1<br>EP 2296828 A1<br>CA 2726932 A | |
| US 2008/0220250 A1 | 11 September 2008 | WO 2005/099943 A2<br>EP 1737654 A2<br>DE 102004055363 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017508828 A
- JP 2007179018 A